# EUROPEAN PATENT APPLICATION

(11) **EP 4 152 570 A1**
(43) Date of publication of application: **22.03.2023**
(21) Application number: 21803971.7
(22) Date of filing: 24.02.2021
(51) Int. Cl.: H02K 3/34, H01K 1/16, H02K 1/04, H02K 9/22, H02K 1/20, H02K 9/06, H02K 7/14

(54) **STATOR AND FAN MOTOR COMPRISING SAME**

(30) Priority: 12.05.2020 KR 20200056694
(71) Applicant: LG Electronics, Inc., Yeongdeungpo-gu Seoul 07336 (KR)
(72) Inventor: JANG, Kwangyong, Seoul 08592 (KR); HONG, Jin, Seoul 08592 (KR); KIM, Yongdae, Seoul 08592 (KR)
(74) Representative: Vossius & Partner Patentanwälte Rechtsanwälte mbB
(86) International application number: PCT/KR2021/002277
(87) International publication number: WO 2021/230473

(57) **Abstract**

The present invention relates to a stator and a fan motor comprising same, the stator comprising: a stator core including a back yoke and a plurality of teeth that extend to protrude in the radius direction from the inner surface of the back yoke toward the center of the back yoke; a plurality of stator coils respectively wound around the plurality of teeth; and a plurality of teeth insulators for insulating the plurality of teeth from the plurality of stator coils, wherein each of the plurality of teeth insulators comprises: an insulator body for encompassing the teeth; and a plurality of heat-dissipating fins formed to protrude from the side surface of the insulator body so as to expand a contact area with the stator coil, and thus discharge heat of the stator coil, thereby maximizing cooling of coils through convection and conduction.

## Description

### Technical Field

The present disclosure relates to a stator capable of size reduction and improved heat dissipation performance, and a fan motor having the same.

### Background Art

An electric motor may be provided in a home appliance such as a cleaner or a hair dryer.

A cleaner, a hair dryer or the like may use an electric motor as a power source to generate a rotational force.

For example, the electric motor may be coupled to a fan. The fan may rotate by receiving power from the electric motor to generate an airflow.

The cleaner or the hair dryer is operated while being directly lifted by a user with his or her hand.

In order to increase user's portability and convenience, it is necessary to reduce the size and weight of the cleaner or the hair dryer.

To this end, it is required to reduce the size and weight of the electric motor as well as to improve an output of the electric motor. Furthermore, high-speed rotation of the electric motor is essential.

However, as the electric motor rotates at a high speed, a lot of heat is generated in a stator coil of the electric motor during operation, and thus there is a problem in that an output loss of the electric motor increases.

In addition, as the size of the electric motor decreases, a flow path area of air for cooling the electric motor inside the electric motor decreases, and thus there is a problem in that heat dissipation performance is deteriorated.

KR 10-2015-0142767 (published on December 23, 2015, hereinafter Patent Document 1) discloses a stator core having improved processability and a motor including the same.

In the case of Patent Document 1, a structure of an insulator applied to a plurality of divided cores is separately disposed, and ends of the separately disposed insulators are coupled to each other in an overlapping structure.

However, Patent Document 1 has a limitation in securing insulation performance and fastening force, which are problems caused by the size reduction of a motor.

KR 10-2011-0077819 (published on July 07, 2011, hereinafter Patent Document 2) discloses a stator insulator of a brushless motor.

In the case of Patent Document 2, grooves may be disposed at an edge portion of the insulator, and a coil may be wound in the grooves, and the coil may be wound and maintained as a pattern of the designed structure even when the coil is wrapped in multiple layers.

However, Patent Document 2 has a problem in that an internal space of the motor is limited due to a size reduction of the motor, and thus insulation performance is deteriorated.

### Disclosure of Invention

### Technical Problem

A first aspect of the present disclosure is to provide a stator capable of maximizing the cooling of a coil through convection and conduction so as to minimize a loss of motor output due to deterioration of the coil, and improve efficiency and reliability, and a fan motor having the same.

A second aspect of the present disclosure is to provide a stator capable of guiding the winding of a coil to align the coil so as to improve insulation performance, and a fan motor having the same.

A third aspect of the present disclosure is to provide a stator capable of minimizing a spatial restriction inside a motor for the size reduction of the motor, and a fan motor having the same.

A fourth aspect of the present disclosure is to provide a stator capable of improving a fastening force between a tooth and a back yoke when a tooth split core and a concentrated winding are applied for securing the performance and size reduction of a high-speed three-phase motor, and a fan motor having the same.

### Solution to Problem

In order to achieve the foregoing first objective, a stator according to the present disclosure may include a stator core having a back yoke and a plurality of teeth extending from an inner surface of the back yoke to protrude in a radial direction toward the center of the back yoke; a plurality of stator coils wound on each of the plurality of teeth; and a plurality of tooth insulators that insulates between the plurality of teeth and the plurality of stator coils, wherein each of the plurality of tooth insulators includes an insulator body that surrounds the tooth; and a plurality of heat dissipation fins disposed to protrude from a side surface of the insulator body to extend a contact area with the stator coil so as to release the heat of the stator coil.

In order to achieve the foregoing second objective, according to an example associated with the present disclosure, the plurality of heat dissipation fins may be disposed to be spaced apart from one another in an extension direction of the tooth so as to align a mutual distance between the stator coils wound along the extension direction of the tooth to be spaced apart from one another in the extension direction.

According to an example associated with the present disclosure, each of the plurality of heat dissipation fins may protrude in a left-right symmetrical manner with respect to a center line in the extension direction of the tooth.

In order to achieve the foregoing third objective, according to an example associated with the present disclosure, lengths of the plurality of heat dissipation fins protruding from a side surface of the insulator body may gradually decrease from an inner end of the insulator body to an outer end of the insulator body.

According to an example associated with the present disclosure, the plurality of heat dissipation fins may protrude perpendicular to an extension direction of the tooth.

According to an example associated with the present disclosure, the tooth insulator may include a release prevention portion protruding from an inner end portion of the insulator body to prevent the stator coil from being released from the insulator body toward the center of the back yoke; an isolation portion protruding from an outer end portion of the insulator body to prevent the stator coil from being in contact with the back yoke; and a cooling space portion disposed to be open in both directions between the release prevention portion and the isolation portion to constitute an air flow path for cooling the stator coil.

According to an example associated with the present disclosure, the tooth insulator may include a first tooth insulator disposed to cover one side of the tooth; and a second tooth insulator disposed to cover the other side of the tooth to constitute an accommodation space for accommodating the tooth together with the first tooth insulator.

According to an example associated with the present disclosure, the tooth insulator may include a release prevention portion protruding from an inner end portion of the insulator body to prevent the stator coil from being released from the insulator body toward the center of the back yoke; and an isolation portion protruding from an outer end portion of the insulator body to prevent the stator coil from being in contact with the back yoke, wherein the plurality of heat dissipation fins are disposed between the release prevention portion and the isolation portion.

According to an example associated with the present disclosure, each of the plurality of teeth may be disposed to be separable from the back yoke, and provided with a coupling protrusion so as to be slidably coupled in an axial direction along a coupling groove disposed in the back yoke, wherein the coupling protrusion protrudes outward in a radial direction from an outer end portion of the tooth, and both side surfaces thereof are inclined such that a size of the cross-sectional area increases outward in a radial direction.

In order to achieve the foregoing fourth objective, according to an example associated with the present disclosure, the stator may further include an isolation portion protruding from an outer end portion of the insulator body to prevent the stator coil from being in contact with the back yoke; a neutral wire lead-out portion formed to be cut out at an upper side of the isolation portion so as to draw out a neutral wire of the stator coil; an extension portion protruding outward in a radial direction from the isolation portion to cover an upper side of the coupling protrusion; and a connection ring coupling portion disposed to protrude upward so as to engage with a connection ring from the extension portion.

According to an example associated with the present disclosure, the stator may further include an isolation portion protruding from an outer end portion of the insulator body to prevent the stator coil from being in contact with the back yoke; an extension portion protruding outward in a radial direction from the isolation portion to cover an upper side of the coupling protrusion; a connection ring coupling portion disposed to protrude upward so as to be engageable with a connection ring from the extension portion; a cover portion protruding outward in a radial direction from a lower side of the isolation portion to cover a lower side of the coupling protrusion; and an opening portion disposed to be open between the connection ring coupling portion and the cover portion such that the coupling protrusion protrudes from an outer end portion of the insulator body toward the coupling groove.

According to an example associated with the present disclosure, the insulator may be formed of a glass fiber material having a thermal conductivity k within a range of 0.2 to 1.8 to have electrical insulation and thermal conduction.

According to an example associated with the present disclosure, the stator may further include a back yoke insulator that insulates between the back yoke and the stator coil, wherein the back yoke insulator includes a first back yoke insulator disposed to cover an upper side surface of the back yoke and one side of an inner side surface of the back yoke; and a second back yoke insulator disposed to cover a lower side surface of the back yoke and the other side of the inner side surface of the back yoke.

A fan motor according to the present disclosure may include a shroud having a suction port on one side thereof; a motor housing coupled to a lower portion of the shroud; a rotation shaft extending to cross in an axial direction at an inner center of the shroud and the motor housing and rotatably mounted thereon; an impeller rotatably mounted on one side of the rotation shaft; a vane hub provided inside the shroud and provided with a plurality of vanes to guide air sucked in by the impeller into the motor housing; a stator provided inside the motor housing; and a rotor mounted on the rotation shaft to be rotatable with respect to the stator, wherein the stator includes a stator core having a back yoke and a plurality of teeth protruding from the back yoke toward a radial center thereof; a plurality of stator coils wound on each of the plurality of teeth; and an insulator that insulates between the stator core and the plurality of stator coils, and the insulator includes an insulator body that surrounds the tooth; and a plurality of heat dissipation fins disposed to protrude from a side surface of the insulator body to extend a contact area with the stator coil so as to release the heat of the stator coil.

According to an example associated with the fan motor of the present disclosure, the insulator may include a release prevention portion protruding from an inner end portion of the insulator body to prevent the stator coil from being released from the insulator body toward the center of the back yoke; an isolation portion protruding from an outer end portion of the insulator body to prevent the stator coil from being in contact with the back yoke; and a cooling space portion disposed to be open in both directions between the release prevention portion and the isolation portion to constitute an air flow path for cooling the stator coil.

In order to achieve the foregoing fifth objective, according to an example associated with the fan motor of the present disclosure, the insulator may include an insertion portion disposed to be stepped on an outer surface of the isolation portion, and inserted into and fastened to an accommodation portion disposed on an inner surface of the back yoke.

According to an example associated with the fan motor of the present disclosure, the insulator may include a tooth insulator that insulates between the tooth and the stator coil; and a back yoke insulator that insulates between the back yoke and the stator coil.

### Advantageous Effects of Invention

The effects of a stator and a fan motor having the same according to the present disclosure will be described as follows.

First, in a high-speed and ultra-small motor, insulation performance between a stator core and a stator coil may be secured, and a heat dissipation function may be added through an insulator, thereby improving the size reduction and output of the motor.

To this end, the insulator may be implemented using a material having excellent insulation performance and thermal conductivity (k = 0.2 or more), for example, glass fiber.

Second, the insulator may include a plurality of heat dissipation fins to extend a contact area with the stator coil. Accordingly, the insulator may discharge heat generated from the stator coil to a cooling flow path inside a motor housing through heat conduction.

Third, the plurality of heat dissipation fins extend to protrude in a direction crossing an extension direction of the tooth, for example, in a direction perpendicular to the extension direction of the tooth, and are spaced apart from one another in the extension direction of the tooth. According to this, the plurality of heat dissipation fins may allow the stator coil wound on the tooth to be arranged in a plurality of layer structures so as to be radially spaced apart from one another, thereby increasing a space factor (an area of the stator coil occupied in a slot) of the stator coil.

Fourth, the plurality of heat dissipation fins may allow the stator coil to be spaced apart in a radial direction along the extension direction of the tooth, thereby securing an insulation distance to improve insulation performance.

Fifth, the insulator may have a structure that is open to a cooling flow path disposed inside the motor housing to allow air to flow between the stator coils spaced apart from one another by the heat dissipation fins, thereby improving the heat dissipation performance of the coil through the insulator.

Sixth, the insulator may further include a release prevention portion and an isolation portion respectively protruding vertically from both end portions of an insulator body with a plurality of heat dissipation fins vertically protruding from the insulator body therebetween.

The release prevention portion and the isolating portion may further protrude vertically in a top-down direction than the plurality of heat dissipation fins to provide a cooling space portion between the release prevention portion and the isolating portion. The cooling space portion allows the stator coil to move between layers of the plurality of heat dissipation fins when the stator coil is wound.

The cooling space portion may communicate with a suction flow path of air sucked into the motor housing to release the heat of the stator coil through convection, thereby improving the heat dissipation performance of the coil.

Seventh, a neutral wire lead-out portion may be formed by a cutout in an upper portion of the isolation portion, and a connection ring coupling portion may be disposed to protrude toward an upper portion of a back yoke from the isolation portion so as to be coupled to a coil coupling portion of a connection ring.

A neutral wire of the stator coil may be drawn out through the neutral wire lead-out portion and connected to the coil coupling portion of the connection ring coupled to the connection ring coupling portion, thereby efficiently utilizing a narrow space due to a spatial restriction inside the motor housing.

Eighth, a plurality of busbars for supplying three-phase AC power sources to the stator coil may be arranged to extend from a lower portion of the back yoke to a space between a plurality of second bridges disposed in a lower portion of the motor housing, thereby allowing the busbars to be arranged in a compact manner despite the spatial restriction inside the motor housing.

Ninth, an insertion portion may be disposed to be stepped on an outer surface of the isolation portion, and an accommodation portion may be disposed to be cooperable with the insertion portion on an inner surface portion of a back yoke insulator, thereby improving a fastening force between a tooth insulator and the back yoke insulator.

For example, as the insertion portion of the isolation portion may be inserted into and coupled to the accommodation portion, thereby preventing the tooth insulator from being rotated in a circumferential direction with respect to a back tooth insulator.

In addition, the insertion portion of the isolation portion may serve as a support for the tooth insulator, thereby preventing the release prevention portion of the tooth insulator from being shaken or rotated left and right.

### Brief Description of Drawings

FIG. 1 is a perspective view showing an exterior of a fan motor according to the present disclosure.
FIG. 2 is a perspective view showing a shape in which a vane hub and a motor housing are coupled to each other after a shroud and an impeller are removed from the fan motor of FIG. 1.
FIG. 3 is a perspective view showing a state in which a bearing housing is coupled to an upper portion of the motor housing after the vane hub is removed from the fan motor of FIG. 2.
FIG. 4 is an exploded view showing a shape in which the vane hub, a connection ring, and the bearing housing are disassembled in FIG. 2.
FIG. 5 is a conceptual view showing a shape in which a cooling flow path is disposed inside the motor housing, as a cross-sectional view taken along V-V in FIG. 2.
FIG. 6 is an exploded view showing a shape in which the tooth of the stator core according to the present disclosure is divided.
FIG. 7 is an assembly view showing a shape in which an insulator is applied to the stator core of FIG. 6.
FIG. 8 is an exploded view showing a shape in which the teeth to which the insulators are applied in FIG. 7 are disassembled from a back yoke.
FIG. 9 shows a shape in which the stator coil is wound between heat dissipation fins of the insulator, as a side view of the insulator taken along line IX-IX in FIG. 8.
FIG. 10 is a bottom view of the insulator taken along line X-X in FIG. 9.
FIG. 11 is a perspective view showing a shape of the insulator before the stator coil is wound thereon in FIG. 9.
FIG. 12 is a bottom view of the insulator viewed in a direction XII in FIG. 11.

### Mode for the Invention

Hereinafter, the embodiments disclosed herein will be described in detail with reference to the accompanying drawings, and the same or similar elements are designated with the same numeral references regardless of the numerals in the drawings and a redundant description thereof will be omitted. A suffix "module" and "unit" used for constituent elements disclosed in the following description is merely intended for easy description of the specification, and the suffix itself does not give any special meaning or function. In describing an embodiment disclosed herein, moreover, the detailed description will be omitted when specific description for publicly known technologies to which the invention pertains is judged to obscure the gist of the present disclosure. Furthermore, the accompanying drawings are provided only for a better understanding of the embodiments disclosed herein and are not intended to limit technical concepts disclosed herein, and therefore, it should be understood that the accompanying drawings include all modifications, equivalents and substitutes within the concept and technical scope of the present disclosure.

The terms including an ordinal number such as first, second, etc. can be used to describe various elements, but the elements should not be limited by those terms. The terms are used merely for the purpose to distinguish an element from the other element.

It will be understood that when an element is referred to as being "connected with" another element, the element can be directly connected with the other element or intervening elements may also be present. On the contrary, in case where an element is "directly connected" or "directly linked" to another element, it should be understood that any other element is not existed therebetween.

A singular representation may include a plural representation unless it represents a definitely different meaning from the context.

Terms "include" or "has" used herein should be understood that they are intended to indicate the existence of a feature, a number, a step, a constituent element, a component or a combination thereof disclosed in the specification, and it may also be understood that the existence or additional possibility of one or more other features, numbers, steps, constituent elements, components or combinations thereof are not excluded in advance.

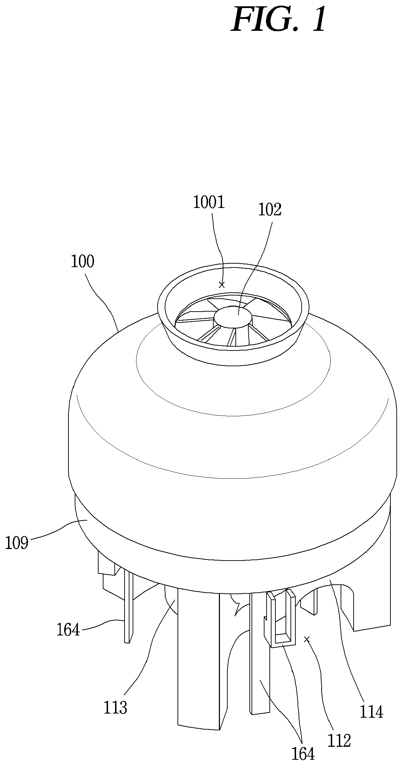

FIG. 1 is a perspective view showing an exterior of a fan motor according to the present disclosure.

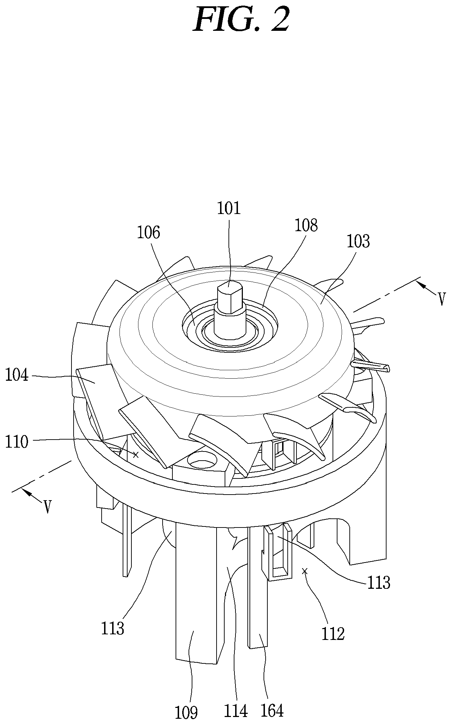

FIG. 2 is a perspective view showing a shape in which a vane hub 103 and a motor housing 109 are coupled to each other after a shroud 100 and an impeller 102 are removed from the fan motor of FIG. 1.

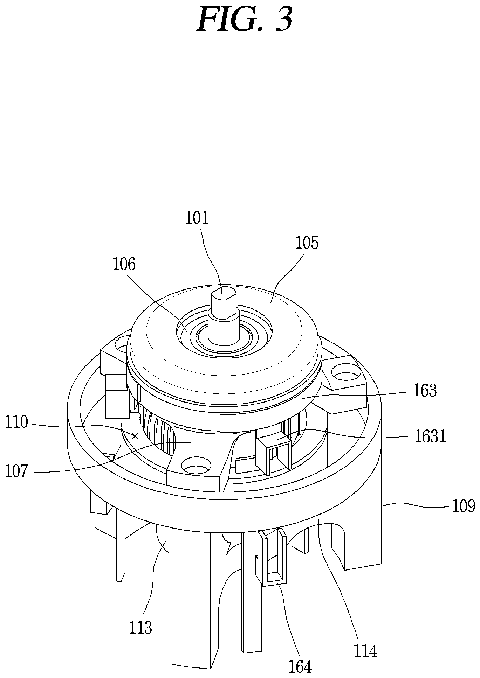

FIG. 3 is a perspective view showing a state in which a bearing housing is coupled to an upper portion of the motor housing 109 after the vane hub 103 is removed from the fan motor of FIG. 2.

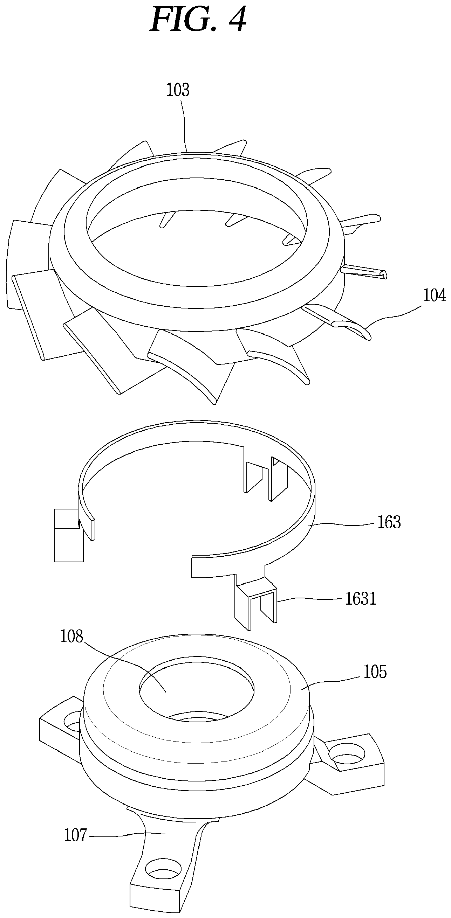

FIG. 4 is an exploded view showing a shape in which the vane hub 103, a connection ring 163, and the bearing housing are disassembled in FIG. 2.

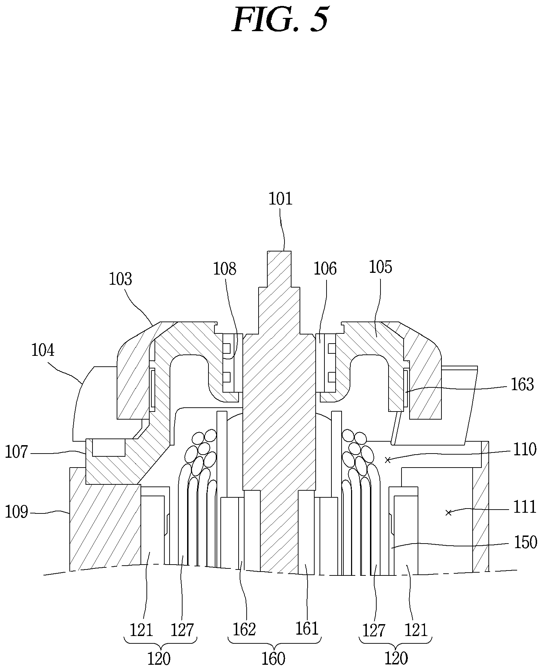

FIG. 5 is a conceptual view showing a shape in which a cooling flow path 111 is disposed inside the motor housing 109, as a cross-sectional view taken along V-V in FIG. 2.

The fan motor according to the present disclosure may include a shroud 100, an impeller 102, a vane hub 103, a rotation shaft 101, bearing housings 105, 113, a motor housing 109, a stator 120, and a rotor.

The shroud 100 and the motor housing 109 may constitute an exterior of the fan motor.

The shroud 100 may be defined in a circular shape.

The shroud 100 may be defined in a combination of a cylindrical shape and a conical shape.

The shroud 100 may be configured in a hollow shape to have an accommodation space thereinside.

The bearing housings 105, 113 may include a first bearing housing 105 and a second bearing housing 113.

In the accommodation space of the shroud 100, the impeller 102, the vane hub 103, and the first bearing housing 105 may be accommodated in the order from an upstream side to a downstream side with respect to an air flow direction.

The impeller 102, the vane hub 103, and the first bearing housing 105 may be sequentially stacked or overlapped in the accommodation space of the shroud 100 from the top to the bottom along an axial direction.

A suction port 1001 may be disposed at an upper end portion of the shroud 100. Outside air may be sucked into the shroud 100 through the suction port 1001. The suction port 1001 may be defined from an upper end portion of the shroud 100 to just prior to an inlet of the impeller 102.

The suction port 1001 may be disposed to have the same or similar size as a diameter of the impeller 102.

The suction port 1001 may be disposed to be narrower toward the inlet of the impeller 102 from the upper end portion of the shroud 100. According to this, outside air may be sucked into the impeller 102 while the flow rate increases in the suction port 1001.

The rotation shaft 101 is disposed to cross in a top-down vertical direction in the accommodation space of the shroud 100.

The impeller 102 may be configured with a hub and a blade.

An inner side of the hub may be coupled to an upper end portion of the rotation shaft 101, so that the hub can be rotated together with the rotation shaft 101.

A plurality of blades are disposed on an outer peripheral surface of the hub. The blade is integrally formed into the hub to rotate with the hub.

As the impeller 102 is rotated by the rotation shaft 101, it can suck outside air.

The vane hub 103 is disposed at a downstream side of the impeller 102. The vane hub 103 may be defined in a hollow cylindrical shape.

A through hole may be disposed at an upper end portion of the vane hub 103 such that the rotation shaft 101 protrudes toward the hub of the impeller 102 through the through hole. The vane hub 103 may be disposed to open downward.

A plurality of vanes 104 are disposed to protrude radially from an outer peripheral surface of the vane hub 103. The plurality of vanes 104 may be disposed to be spaced apart from one another in a circumferential direction of the vane hub 103.

Each of the plurality of vanes 104 may be inclined counterclockwise from an upper end to a lower end of the vane hub 103. Each of the plurality of vanes 104 may be defined in a curved shape.

The plurality of vanes 104 may guide air sucked by the impeller 102 into the motor housing 109.

The vane hub 103 is configured to have a larger diameter than the hub of the impeller 102. An outer diameter of the vane 104 may also be disposed to be larger than that of the blade of the impeller 102.

The shroud 100 may be defined in a cylindrical shape to surround the plurality of vanes 104. A lower end portion of the shroud 100 may be coupled to an upper end portion of the motor housing 109.

Due to a difference between the diameter of the impeller 102 and the diameter of the vane 104, the shroud 100 may be inclined such that a diameter thereof increases from the impeller 102 to the vane 104.

Outside air may spread out in a direction in which the diameter increases when passing the vane hub 103 from the impeller 102. Outside air may be flow into the motor housing 109 by the plurality of vanes 104.

The first bearing housing 105 may be defined in a cylindrical shape. The first bearing housing 105 may be accommodated inside the vane hub 103.

A bearing accommodation portion 108 may be recessed downward from the upper center of the first bearing housing 105. The bearing accommodation portion 108 may be disposed to be exposed upward through the through hole of the vane hub 103.

The first bearing 106 may be provided inside the bearing accommodation portion 108 to be accommodated therein. The first bearing 106 may rotatably support one side of the rotation shaft 101.

A connection ring mounting portion may be disposed on an outer surface of the first bearing housing 105.

The connection ring 163 is configured to connect an end (neutral wire) of each phase coil. The connection ring 163 may be defined in a ring shape with one side thereof open. The connection ring 163 is formed of a conductive material.

The connection ring 163 (refer to FIG. 3) includes a plurality of coil coupling portions 1631. Each of the plurality of coil coupling portions 1631 may be disposed to protrude downward toward the stator 120 for connection with a neutral wire of a stator coil 127.

The coil coupling portion 1631 may be defined in a "U" shape. The coil coupling portion 1631 may be disposed to be open downward. The coil coupling portion 1631 may be disposed to be open in a radial direction and a downward direction of the connection ring 163.

The coil coupling portion 1631 may be configured in a box structure in which an upward upper side and both circumferential left and right sides of the connection ring 163 are closed.

A plurality of first bridges 107 may extend outward in a radial direction from a lower end of the first bearing housing 105. In the present embodiment, it is shown a shape in which three first bridges 107 are disposed.

Fastening holes may be respectively disposed in the plurality of first bridges 107. Since a fastening member such as a screw passes through the fastening hole to be fastened to the motor housing 109, the first bridge 107 may be coupled to the motor housing 109.

A suction flow path 110 through which air can be sucked may be disposed between the plurality of first bridges 107. The suction flow path 110 may be used as a flow path for sucking air into the motor housing 109.

The suction flow path 110 may be connected in communication with a flow path between the vanes 104.

The motor housing 109 is disposed under the shroud 100.

The stator 120 and the rotor 160 are accommodated inside the motor housing 109.

The motor housing 109 is defined in a cylindrical shape. The motor housing 109 is configured to surround an outer peripheral surface of the stator 120.

The rotation shaft 101 is configured to pass through the center of the motor housing 109.

The second bearing housing 113 may be provided under the motor housing 109. A second bearing may be mounted inside the second bearing housing 113. The second bearing may rotatably support the other side of the rotation shaft 101.

The rotation shaft 101 may be rotatably supported at both ends by the first bearing 106 and the second bearing (not shown).

A plurality of second bridges 114 may be disposed to protrude inward in a radial direction at a lower portion of the motor housing 109. In the present embodiment, it is shown a shape in which three second bridges 114 are disposed. The plurality of second bridges 114 are configured to connect the motor housing 109 and the second bearing housing 113.

A plurality of discharge flow paths 112 may be disposed under the motor housing 109. The plurality of discharge flow paths 112 may be disposed between the plurality of second bridges 114.

The rotor 160 is rotatably mounted with respect to the stator 120 with a gap inside the stator 120.

The rotor 160 may include a rotor core 161 and a permanent magnet 162. The permanent magnet 162 may be fixedly provided on an outer peripheral surface of the rotor core 161.

The rotor core 161 is defined in a cylindrical shape. A shaft accommodation hole is disposed at a center portion of the rotor core 161 to pass therethrough in an axial direction. The rotation shaft 101 may pass through the shaft accommodation hole, and be coupled to the rotor core 161.

The rotor core 161 is mounted on the rotation shaft 101 to be rotatable together with the rotation shaft 101.

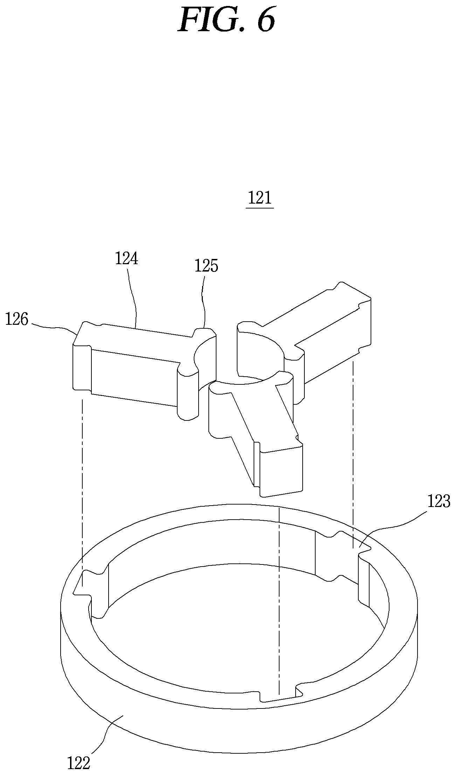

FIG. 6 is an exploded view showing a shape in which the tooth 124 of the stator core 121 according to the present disclosure is divided.

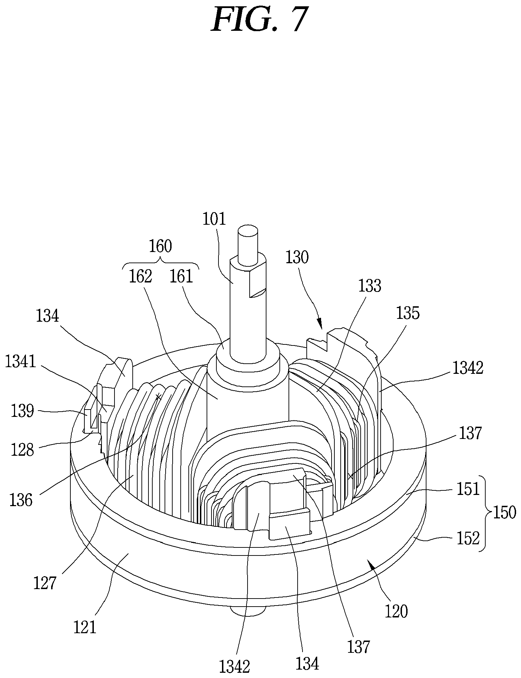

FIG. 7 is an assembly view showing a shape in which an insulator 130 is applied to the stator core 121 of FIG. 6.

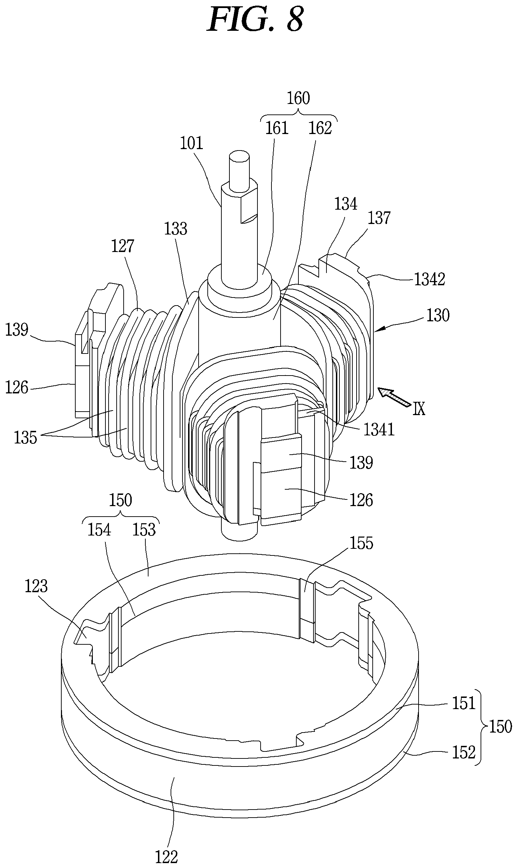

FIG. 8 is an exploded view showing a shape in which the teeth 124 to which the insulators 130 are applied in FIG. 7 are disassembled from a back yoke 122.

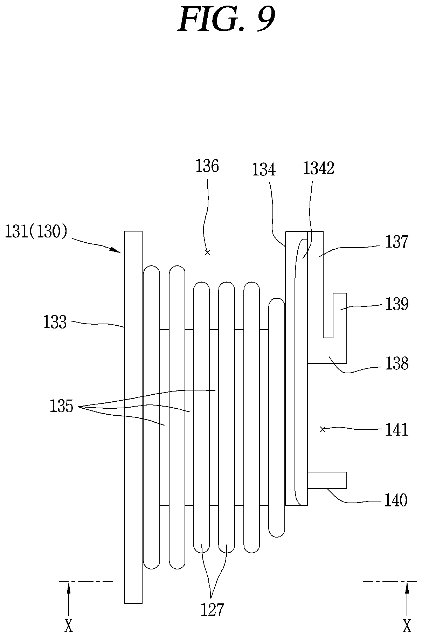

FIG. 9 shows a shape in which the stator coil 127 is wound between heat dissipation fins 135 of the insulator 130, as a side view of the insulator 130 taken along line IX-IX in FIG. 8.

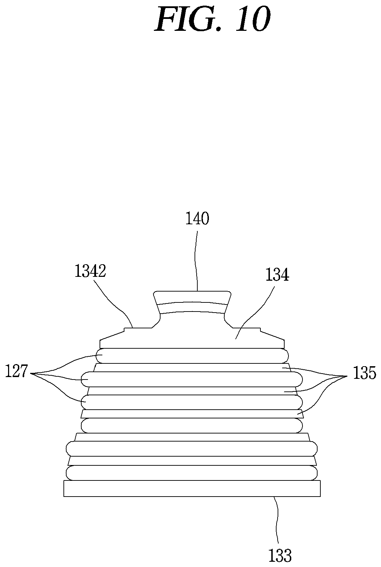

FIG. 10 is a bottom view of the insulator 130 taken along line X-X in FIG. 9.

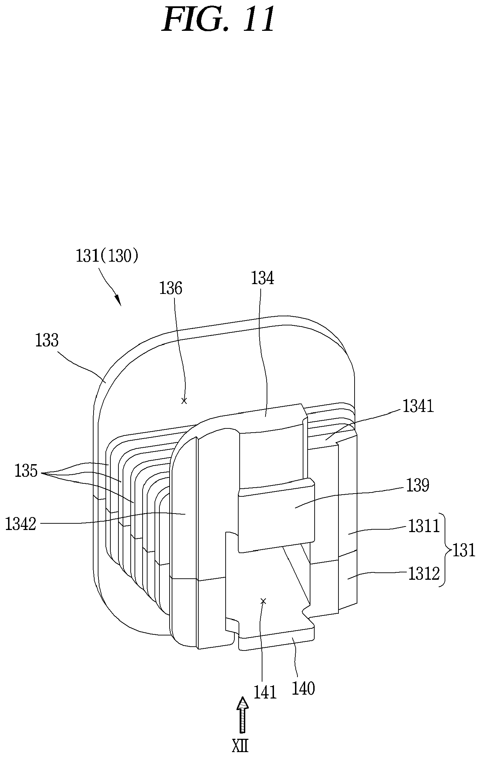

FIG. 11 is a perspective view showing a shape of the insulator 130 before the stator coil 127 is wound thereon in FIG. 9.

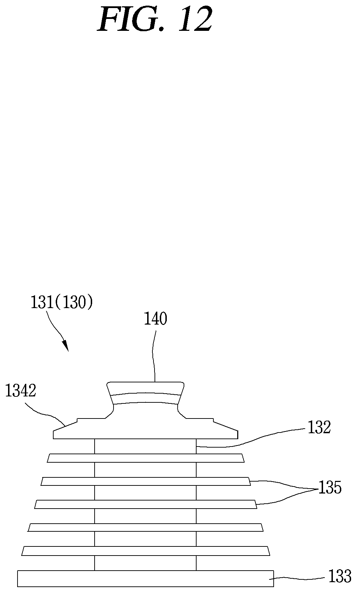

FIG. 12 is a bottom view of the insulator 130 viewed in a direction XII in FIG. 11.

The stator 120 may include the stator core 121 and the stator coil 127.

The stator core 121 may include a back yoke 122 and a plurality of teeth 124.

The back yoke 122 may be defined in a ring shape or a hollow cylindrical shape. The back yoke 122 may be defined in a closed loop shape.

The back yoke 122 may be configured by stacking and bonding a plurality of ring-shaped electrical steel sheets.

In the present embodiment, it is shown a shape in which three teeth 124 are provided inside the back yoke 122.

Three-phase stator coils 127 may be respectively wound on the three teeth 124, respectively.

Each of the plurality of teeth 124 may have a rectangular cross-sectional shape and may be defined in a rod shape.

The tooth 124 may extend to protrude from an inner surface of the back yoke 122 toward the center of the back yoke 122.

A slot may be disposed between the plurality of teeth 124. The slot may constitute a cooling flow path 111 to allow air to flow into the motor housing 109.

A pole shoe 125 may be provided at one end portion of the tooth 124. The pole shoe 125 may extend to protrude from one end of the tooth 124 in a circumferential direction. The pole shoe 125 may be disposed in a left-right symmetrical manner with respect to a radial center line of the tooth 124.

The plurality of stator coils 127 may be configured with three-phase coils.

In order to secure the performance and size reduction of the motor, the stator coil 127 may be wound on the stator core 121 in the form of a centralized winding.

Each of the three-phase stator coils 127 is configured to be wound on the tooth 124. A busbar 164 is connected to the three-phase stator coil 127. The busbar 164 is formed of a conductive material such as copper.

Three-phase alternating currents may be respectively applied to the three-phase stator coils 127 through the busbars 164. The plurality of busbars 164 may be disposed under the motor housing 109.

The plurality of busbars 164 may be alternately spaced apart from the plurality of second bridges 114 in a circumferential direction of the motor housing 109.

The plurality of busbars 164 may be disposed to be spaced apart from one another in a circumferential direction in order to secure an insulating distance. The plurality of busbars 164 may also be disposed to be spaced apart from the second bridge 114 in a circumferential direction in order to secure an insulating distance.

The plurality of teeth 124 may be disposed detachably from the back yoke 122 in order to secure the performance of the motor and to reduce the size.

The plurality of teeth 124 may be mounted on an inner surface of the back yoke 122.

To this end, a coupling protrusion 126 may be disposed at the other end portion of the tooth 124 to protrude toward the back yoke 122.

The coupling protrusion 126 may have a rectangular cross-sectional shape and protrude such that a cross-sectional area thereof is gradually increased. The coupling protrusion 126 may be disposed in a trapezoidal shape when viewed from the top in an axial direction (or stacking direction) of the back yoke 122.

A portion where the protrusion of the coupling protrusion 126 begins may be disposed to be smaller than a cross-sectional area of the tooth 124. A portion where the protrusion of the coupling protrusion 126 ends may be disposed to have the same or similar size as the cross-sectional area of the tooth 124.

A plurality of coupling grooves 123 may be disposed on an inner surface of the back yoke 122.

The coupling groove 123 may be disposed to open inward in a radial direction of the back yoke 122. The coupling groove 123 may be formed to be open in the axial direction of the back yoke 122.

The coupling groove 123 may be disposed to be recessed in a radial direction from an inner surface of the back yoke 122.

The coupling groove 123 may be disposed to correspond to the coupling protrusion 126. The coupling groove 123 and the coupling protrusion 126 are configured to mate with each other.

The coupling groove 123 may be defined in a trapezoidal shape when viewed in an axial direction of the back yoke 122.

A portion where the recess of the coupling groove 123 begins on an inner surface of the back yoke 122 may be disposed to be smaller than the cross-sectional area of the tooth 124. A portion where the recess of the coupling groove 123 ends may be disposed to have the same or similar size as the cross-sectional area of the tooth 124.

Each edge of the coupling protrusion 126 and the coupling groove 123 may be defined in a rounded or curved shape.

The coupling protrusion 126 and the coupling groove 123 are not limited to a trapezoidal shape and may be defined in various shapes.

However, when the portion where the protrusion of the coupling protrusion 126 begins is disposed to have a smaller cross-sectional area than the portion at which the protrusion of the coupling protrusion 126 ends, it may be prevent the back yoke 122 and the tooth 124 from being assembled in a radial direction.

In addition, when a portion where the recess of the coupling groove 123 begins is smaller than a portion where the recess of the coupling groove 123 ends, the coupling protrusion 126 of the tooth 124 cannot be inserted in a radial direction toward an inner surface of the back yoke 122 from the center of the back yoke 122.

According to this configuration, as the assembly of the back yoke 122 and the tooth 124 is performed in an axial direction, there is an advantage of facilitating the assembly of the back yoke 122 and the tooth 124 despite the size reduction of the motor.

When a size of the motor is large, for example, when a diameter of the stator core 121 is large, the assembly of the back yoke 122 and the teeth 124 may be performed in a radial direction.

However, when the size of the motor is small, for example, when the diameter of the stator core 121 is small, the back yoke 122 and the teeth 124 cannot be assembled in a radial direction.

This is because when the other tooth 124 is assembled in a radial direction from the center of the back yoke 122 toward an inner surface of the back yoke 122 while one tooth 124 has been coupled to the back yoke 122, it interferes with the tooth 124 that has already been assembled. In particular, as a diameter of the back yoke 122 decreases, a radial length of the tooth 124 relatively increases, and a distance between the pole shoes 125 of each tooth 124 becomes narrower, and thus the tooth 124 cannot be assembled in a radial direction.

The stator 120 includes the insulator 130 that insulates between the stator core 121 and the stator coil 127.

The insulator 130 of the present disclosure not only has electrical insulation, but also has a function of dissipating heat.

To this end, the insulator 130 is made of a material having insulation and thermal conduction.

For example, the insulator 130 may be formed of a material having a thermal conductivity k within a range of 0.2 to 1.8. The higher the thermal conductivity value, the better the thermal conductivity.

The unit of thermal conductivity is W/m K obtained by dividing the unit of heat W (watt) by a product of the unit of distance m (meter) and the unit of temperature K (Kelvin).

The insulator 130 may be a glass fiber having excellent insulation and thermal conductivity.

The insulator 130 includes a back yoke insulator 150 that insulates the back yoke 122 and a tooth insulator 131 that insulates the tooth 124.

The back yoke insulator 150 includes a first back yoke insulator 151 and a second back yoke insulator 152.

The first back yoke insulator 151 may be configured to cover an upper end portion of the back yoke 122 and one side of an inner surface of the back yoke 122. The first back yoke insulator 151 may include a first flange portion 153 covering the upper end portion of the back yoke 122 and a first inner surface portion 154 covering one side of the inner surface of the back yoke 122.

The first flange portion 153 is disposed to extend in a radial direction of the back yoke 122. The first inner surface portion 154 is disposed to extend in an axial direction along a circumferential direction of the back yoke 122.

The first flange portion 153 and the first inner surface portion 154 may be integrally formed while constituting a right angle with each other.

The second back yoke insulator 152 may be configured to cover a lower end portion of the back yoke 122 and another side of the inner surface of the back yoke 122. The second back yoke insulator 152 may include a second flange portion covering a lower end portion of the back yoke 122 and a second inner surface portion covering another side of the inner surface of the back yoke 122.

The second flange portion is disposed to extend in a radial direction of the back yoke 122. The second inner surface portion is disposed to extend in an axial direction along a circumferential direction of the back yoke 122.

The second flange portion and the second inner surface portion may be integrally formed while constituting a right angle with each other.

A portion of each of the first inner surface portion 154 and the second inner surface portion may be disposed to overlap the back yoke 122 in a radial direction. An overlapping portion of each of the first inner surface portion 154 and the second inner surface portion may be disposed to be thinner than a nonoverlapping portion thereof, thereby preventing the first and second inner surface portions from being stepped.

Each of the first and second back yoke insulators 151, 152 may be disposed so as not to cover the coupling groove 123. Each of the first and second back yoke insulators 151, 152 may be disposed so as not to cover an outer surface of the back yoke 122.

This is because the back yoke 122 secures insulation between the stator coil 127 and the stator core 121 by the back yoke insulator 150, as well as further facilitates heat conduction and heat dissipation through the coupling groove 123 and the outer surface of the back yoke 122.

The tooth insulator 131 may include an insulator body 132, a release prevention portion 133, an isolation portion 134, a cover portion 140, and an opening portion 141.

The insulator body 132 is configured to surround the tooth 124. The insulator body 132 has a hollow rectangular cross-sectional shape and is disposed to cover the tooth 124 along an extension direction of the tooth 124.

Each edge of the insulator body 132 is defined in a rounded and curved shape.

The release prevention portion 133 may surround one end portion of the tooth 124, for an example, the pole shoe 125, and may extend to protrude from the pole shoe 125 in a top-down direction (or an axial direction of the back yoke 122).

The release prevention portion 133 may extend to protrude from the pole shoe 125 in left and right lateral directions toward a space between two teeth 124 adjacent to each other in a circumferential direction.

The release prevention portion 133 may be defined in a substantially rectangular plate shape. Each edge portion of the release prevention portion 133 may be defined in a rounded curved shape.

The release prevention portion 133 may be disposed to protrude in a direction crossing an extension direction of the insulator body 132. The release prevention portion 133 may be disposed to protrude in a radial direction and a vertical direction of the insulator body 132.

The release prevention portion 133 may prevent the stator coil 127 from being released from the insulator body 132 toward the center of the back yoke 122.

The isolation portion 134 may be extended to protrude in a top-down direction (or an axial direction of the back yoke 122) at the other end portion of the tooth 124, for an example, a portion adjacent in a radial direction to a portion where the protrusion of the coupling protrusion 126 begins.

The isolation portion 134 may extend to protrude from the pole shoe 125 in left and right lateral directions toward a space between the two teeth 124 adjacent to each other in a circumferential direction.

The isolation portion 134 may be defined in a substantially rectangular plate shape. Each edge of the isolation portion 134 may be defined in a rounded curved shape.

The isolation portion 134 may be disposed to protrude in a direction crossing an extension direction of the insulator body 132. The isolation portion 134 may be disposed to protrude in a radial direction and a vertical direction of the insulator body 132.

The isolation portion 134 and the release prevention portion 133 are disposed to be spaced apart from each other in a radial direction of the insulator body 132. The isolation portion 134 and the release prevention portion 133 may be disposed in parallel to each other.

The release prevention portion 133 may be disposed to have a larger area than the isolation portion 134.

The isolation portion 134 is configured to block the stator coil 127 from being brought into contact with an inner surface of the back yoke 122. The isolation portion 134 is configured to block the stator coil 127 from being brought into contact with the inner surface portion 154 of the back yoke insulator 150.

Furthermore, the isolation portion 134 may be disposed to protrude in a tangential direction from the insulator body 132 to an inner peripheral surface of the tooth 124.

An insertion portion 1342 may be disposed to be stepped at both end portions of an outer surface of the isolation portion 134. For example, the insertion portion 1342 may be disposed in a tangential direction in a two-step stepwise manner.

The insertion portion 1342 may be disposed to have a smaller thickness as it goes away from the center of the isolation portion 134.

The insertion portion 1342 may be coupled to be inserted into the inner surface portion154 of the back yoke insulator 150.

The accommodation portion 155 may be disposed to be recessed in the inner surface portion154 of the back yoke insulator 150 to accommodate the insertion portion 1342. The accommodation portion 155 may be disposed to mate with the insertion portion 1342.

According to this configuration, the tooth insulator 131 and the back yoke insulator 150 may be rigidly coupled to each other.

For example, the insertion portion 1342 may be coupled to the accommodation portion 155 to allow axial sliding of the back yoke 122, but the insertion portion 1342 may be engaged with the accommodation portion 155 to prevent the tooth insulator 131 from being rotated in a circumferential direction with respect to the back yoke 122.

In addition, it may be possible to prevent the pole shoe 125 of the tooth 124 from being rotated (shaken) left and right about the coupling protrusion 126 of the tooth 124.

The insertion portion 1342 and the accommodation portion 155 may be bonded to each other with an adhesive such as a bond, thereby preventing the coupling protrusion 126 of the tooth insulator 131 from moving in an axial direction along the coupling groove 123 of the back yoke insulator 150.

The tooth insulator 131 has a protruding portion 137. The protruding portion 137 may be disposed to mate with a portion where the recess of the coupling groove 123 begins. Both side surfaces of the protruding portion 137 may be defined in a rounded curved shape.

A connection ring coupling portion 139 may be disposed to protrude outward in a radial direction from the protruding portion 137.

The connection ring coupling portion 139 may be defined in a rectangular plate shape.

The connection ring coupling portion 139 may be disposed to be spaced apart from the protruding portion 137 at an interval. A lower end portion of the connection ring coupling portion 139 may be connected to the protruding portion 137 by an extension portion 138 extending to protrude outward in a radial direction from the protruding portion 137.

The extension portion 138 and the connection ring coupling portion 139 are configured to cover an upper side of the coupling protrusion 126.

The cover portion 140 is disposed to protrude from a lower portion of the protruding portion 137, and is configured to cover a lower side of the coupling protrusion 126.

The extension portion 138 and the cover portion 140 may be disposed to be spaced apart from each other in an axial direction of the coupling groove 123.

The connection ring coupling portion 139 may extend to protrude upward from an upper side of the coupling groove 123 of the back yoke 122.

The connection ring coupling portion 139 may be inserted into the coil coupling portion 1631 of the connection ring 163, and thus may be coupled to the connection ring 163.

A neutral wire lead-out portion 1341 may be disposed at an upper corner of the isolation portion 134. In the neutral wire lead-out portion 1341, the upper corner of the isolation portion 134 may be formed by a cutout in a rectangular shape such that a neutral wire of the stator coil 127 is drawn out from an inside of the isolation portion 134 to the coil coupling portion 1631.

According to this configuration, the neutral wire of the stator coil 127 may pass in a radial direction through the neutral wire lead-out portion 1341 of the isolation portion 134 toward the coil coupling portion 1631 from an inside of the isolation portion 134, and may be electrically connected to the coil coupling portion 1631 of the connection ring 163.

An opening portion 141 between the connection ring coupling portion 139 and the cover portion 140 may be disposed to be open outward in a radial direction and to both left and right sides in a circumferential direction.

The coupling protrusion 126 of the tooth 124 may be exposed toward an outside of the tooth insulator 131, that is, toward an inside of the coupling groove 123 through the opening portion 141.

The tooth insulator 131 includes a plurality of heat dissipation fins 135.

The plurality of heat dissipation fins 135 may be disposed to protrude from the insulator body 132 in a direction crossing an extension direction of the insulator body 132. The plurality of heat dissipation fins 135 may be disposed to protrude in a radial direction and a vertical direction of the insulator body 132.

The plurality of heat dissipation fins 135 may be defined in a rectangular plate shape. Each edge of the heat dissipation fins 135 may be defined in a rounded curved shape.

The plurality of heat dissipation fins 135 may be disposed to be spaced apart from one another in an extension direction, that is, in a radial direction, of the insulator body 132.

The plurality of heat dissipation fins 135 may be spaced apart from one another at an interval same as a diameter of the stator coil 127.

A coil accommodation portion may be disposed between two heat dissipation fins 135 adjacent to each other in an extension direction of the insulator body 132. The plurality of heat dissipation fins 135 and the plurality of coil accommodation portions may be alternately disposed to be spaced apart from one another along an extension direction of the insulator body 132.

The stator coil 127 may be inserted between the plurality of heat dissipation fins 135. The stator coil 127 in the coil accommodation portion may be wound to overlap in a radial direction and a vertical direction of the insulator body 132.

The stator coil 127 may be wound in multiple layers overlapping the coil accommodation portion.

The stator coil 127 may be in close contact with the plurality of heat dissipation fins 135.

According to this configuration, the plurality of heat dissipation fins 135 may extend a contact area with the stator coil 127. The plurality of heat dissipation fins 135 may be in contact with the stator coil 127 to discharge heat generated from the stator coil 127 to the cooling flow path 111 inside the motor housing 109 through conduction and convection.

In addition, the plurality of heat dissipation fins 135 may be spaced apart from one another in a radial direction between the stator coils 127 wound around the insulator 130 in an extension direction of the tooth 124.

According to this configuration, the plurality of heat dissipation fins 135 may secure an insulation distance between the stator coils 127.

The insulation distance can be calculated as a sum of a creepage distance and a clearance distance.

The creepage distance is a sum a contact distance d1 between two surfaces of the heat dissipation fin 135 in contact with the stator coil 127 with the stator coil 127 interposed therebetween, and a distance in an extension direction of the insulator body 132 in contact with the stator coil 127.

The clearance distance refers to a separation distance between the stator coils 127 spaced apart in a radial direction by a thickness of the heat dissipation fin 135.

The heat dissipation fins 135 may increase the insulation distance between the stator coils 127, thereby improving dielectric strength and securing insulation performance between the stator coils 127.

The insulator 130 is configured to be open to the cooling flow path 111 inside the motor housing 109.

Each of the isolation portion 134 and the release prevention portion 133 of the insulator 130 may be disposed to protrude upward more than an upper side of the back yoke 122.

A cooling space portion 136 may be disposed between the isolation portion 134 and the release prevention portion 133.

The cooling space portion 136 may be connected in communication with the suction flow path 110 formed on an upper side of the motor housing 109.

As the stator coil 127 is wound, interlayer crossing may be made in a radial direction in the cooling space portion 136.

Since the cooling space portion 136 is actively in contact with the stator coil 127 and air, heat of the stator coil 127 may be discharged to the cooling flow path 111 inside the motor housing 109 through convection.

The plurality of heat dissipation fins 135 may be disposed to have a gradually decreasing area from the release prevention portion 133 to the isolation portion 134.

The plurality of heat dissipation fins 135 may be disposed to have a gradually decreasing area from an inner end portion to an outer end portion of the insulator body 132.

According to this configuration, the plurality of tooth insulators 131 on which the stator coil 127 is wound may be easily assembled to an inside of the back yoke 122 during assembly.

If the plurality of heat dissipation fins 135 are disposed to have the same area and size as one another, the heat dissipation fins 135 may interfere with or may not be assembled with the inner surface portion 154 of the back yoke insulator 150.

The tooth insulator 131 may include a first tooth insulator 1311 and a second tooth insulator 1312.

The first and second tooth insulators 1311, 1312 are disposed by dividing the tooth insulator 131 into upper and lower portions to completely surround the tooth 124 by 360 degrees.

The first and second tooth insulators 1311, 1312 are disposed to overlap in a top-down direction.

The first tooth insulator 1311 is disposed to surround one side of the tooth 124. A space that accommodates one side of the tooth 124 may be provided inside the first tooth insulator 1311.

The second tooth insulator 1312 is disposed to surround the other side of the tooth 124. The second tooth insulator 1312 may have a space that accommodates the other side of the tooth 124.

The first tooth insulator 1311 includes a first insulator body, a first release prevention portion, a first isolation portion, a protruding portion 137, an extension portion 138, and a connection ring coupling portion 139.

The first insulator body may be disposed to cover an upper portion of the tooth 124. An upper portion of the tooth 124, which is a part of the tooth 124, denotes that it is located at an upstream side with respect to an air flow direction.

A cross-sectional shape of the first insulator body may be defined in a "U" shape.

The first release prevention portion may be disposed to cover an upper end portion of the tooth 124, for example, an upper portion of the pole shoe 125. The first release prevention portion may be disposed to protrude in upward and left-right lateral directions from the upper portion (including about half of an upper surface and left and right sides) of the pole shoe 125.

The first isolation portion may be disposed to protrude in upward and left-right lateral directions from an upper portion of the other end of the tooth 124.

The protruding portion 137 may be disposed to protrude outward in a radial direction from the first isolation portion.

The extension portion 138 may protrude outward in a radial direction from the protruding portion 137.

The connection ring coupling portion 139 may be disposed to protrude upward from the extension portion 138.

The second tooth insulator 1312 includes a second insulator body, a second release prevention portion, a second isolation portion, and a cover portion 140.

The second insulator body may be disposed to cover a lower portion of the tooth 124. A lower portion of the tooth 124, which is another part of the tooth 124, denotes that it is located at a downstream side with respect to the air flow direction.

A cross-sectional shape of the second insulator body may be defined in a "U" shape.

Since a lower portion of the first insulator body and an upper portion of the second insulator body are open in opposite directions, one tooth 124 may be accommodated therein.

The second release prevention portion may be disposed to cover a lower end portion of the tooth 124, for example, a lower portion of the pole shoe 125. The second release prevention portion may be disposed to protrude in downward and left-right lateral directions from the lower portion (including about half of an upper surface and left and right sides) of the pole shoe 125.

The second isolation portion may be disposed to protrude in upward and left-right lateral directions from a lower portion of the other end of the tooth 124.

The cover portion 140 may be disposed to protrude outward in a radial direction from the second isolation portion.

The first and second insulator bodies, the first and second release prevention portions, and the first and second isolation portions constitute a pair with each other and have the same or similar functions and effects except for different positions, and a redundant description thereof will be omitted, and replaced with the description of the foregoing insulator body 132, the release prevention portion 133, and the isolation portion 134.

Therefore, according to the present disclosure, in a high-speed and ultra-small motor, insulation performance between the stator core 121 and the stator coil 127 may be secured, and a heat dissipation function may be added through the insulator 130, thereby improving the size reduction and output of the motor.

To this end, the insulator 130 may be implemented using a material having excellent insulation performance and thermal conductivity (k = 0.2 or more), for example, glass fiber.

Furthermore, the insulator 130 may include a plurality of heat dissipation fins 135 to extend a contact area with the stator coil 127. Accordingly, the insulator 130 may discharge heat generated from the stator coil 127 to the cooling flow path 111 inside the motor housing 109 through heat conduction.

In addition, the plurality of heat dissipation fins 135 extend to protrude in a direction crossing an extension direction of the tooth 124, for example, in a direction perpendicular to the extension direction of the tooth 124, and are spaced apart from one another in the extension direction of the tooth 124. According to this, the plurality of heat dissipation fins 135 may allow the stator coil 127 wound on the tooth 124 to be arranged in a plurality of layer structures so as to be radially spaced apart from one another, thereby increasing a space factor (an area of the stator coil 127 occupied in a slot) of the stator coil 127.

Besides, the plurality of heat dissipation fins 135 may allow the stator coil 127 to be spaced apart in a radial direction along the extension direction of the tooth 124, thereby securing an insulation distance to improve insulation performance.

Moreover, the insulator 130 may have a structure that is open to the cooling flow path 111 disposed inside the motor housing 109 to allow air to flow between the stator coils 127 spaced apart from one another by the heat dissipation fins 135, thereby improving the heat dissipation performance of the coil through the insulator 130.

Furthermore, the insulator 130 may further include the release prevention portion 133 and the isolation portion 134 respectively protruding vertically from both end portions of the insulator body 132 with the plurality of heat dissipation fins 135 vertically protruding from the insulator body 132 therebetween.

The release prevention portion 133 and the isolating portion 134 may further protrude vertically in a top-down direction than the plurality of heat dissipation fins 135 to provide the cooling space portion 136 between the release prevention portion 133 and the isolating portion 134. The cooling space portion 136 allows the stator coil 127 to move between layers of the plurality of heat dissipation fins 135 when the stator coil 127 is wound.

The cooling space portion 136 may communicate with a suction flow path 110 of air sucked into the motor housing 109 to release the heat of the stator coil 127 through convection, thereby improving the heat dissipation performance of the coil.

Furthermore, the neutral wire lead-out portion 1341 may be formed by a cutout in an upper portion of the isolation portion 134, and the connection ring coupling portion 139 may be disposed to protrude toward an upper portion of the back yoke 122 from the isolation portion 134 so as to be coupled to the coil coupling portion 1631 of the connection ring 163.

A neutral wire of the stator coil 127 may be drawn out through the neutral wire lead-out portion 1341 and connected to the coil coupling portion 1631 of the connection ring 163 coupled to the connection ring coupling portion139, thereby efficiently utilizing a narrow space due to a spatial restriction inside the motor housing 109.

In addition, the plurality of busbars 164 for supplying three-phase AC power sources to the stator coil 127 may be arranged to extend from a lower portion of the back yoke 122 to a space between the plurality of second bridges 114 disposed in a lower portion of the motor housing 109, thereby allowing the busbars 164 to be arranged in a compact manner despite a spatial restriction inside the motor housing 109.

Besides, the insertion portion 1342 may be disposed to be stepped on an outer surface of the isolation portion 134, and the accommodation portion 155 may be disposed to be cooperable with the insertion portion 1342 on the inner surface portion 154 of the back yoke insulator 150, thereby improving a fastening force between the tooth insulator 131 and the back yoke insulator 150.

For example, as the insertion portion 1342 of the isolation portion 134 may be inserted into and coupled to the accommodation portion 155, thereby preventing the tooth insulator 131 from being rotated in a circumferential direction with respect to a back tooth insulator 131.

Moreover, the insertion portion 1342 of the isolation portion 134 may serve as a support for the tooth insulator 131, thereby preventing the release prevention portion 133 of the tooth insulator 131 from being shaken or rotated left and right.

## Claims

1. A stator comprising:
a stator core having a back yoke and a plurality of teeth extending from an inner surface of the back yoke to protrude in a radial direction toward the center of the back yoke;
a plurality of stator coils wound on each of the plurality of teeth; and
a plurality of tooth insulators that insulates between the plurality of teeth and the plurality of stator coils,
wherein each of the plurality of tooth insulators comprises:
an insulator body that surrounds the tooth; and
a plurality of heat dissipation fins disposed to protrude from a side surface of the insulator body to extend a contact area with the stator coil so as to release the heat of the stator coil.

2. The stator of claim 1, wherein the plurality of heat dissipation fins are disposed to be spaced apart from one another in an extension direction of the tooth so as to align mutual distances between the stator coils wound along the extension direction of the tooth to be spaced apart from one another in the extension direction.

3. The stator of claim 1, wherein each of the plurality of heat dissipation fins protrudes in a left-right symmetrical manner with respect to a center line in the extension direction of the tooth.

4. The stator of claim 1, wherein lengths of the plurality of heat dissipation fins protruding from a side surface of the insulator body gradually decrease from an inner end of the insulator body to an outer end of the insulator body.

5. The stator of claim 1, wherein the plurality of heat dissipation fins protrude perpendicular to an extension direction of the tooth.

6. The stator of claim 1, wherein the tooth insulator comprises:
a release prevention portion protruding from an inner end portion of the insulator body to prevent the stator coil from being released from the insulator body toward the center of the back yoke;
an isolation portion protruding from an outer end portion of the insulator body to prevent the stator coil from being in contact with the back yoke; and
a cooling space portion disposed to be open in both directions between the release prevention portion and the isolation portion to constitute an air flow path for cooling the stator coil.

7. The stator of claim 1, wherein the tooth insulator comprises:
a first tooth insulator disposed to cover one side of the tooth; and
a second tooth insulator disposed to cover the other side of the tooth to constitute an accommodation space for accommodating the tooth together with the first tooth insulator.

8. The stator of claim 1, wherein the tooth insulator comprises:
a release prevention portion protruding from an inner end portion of the insulator body to prevent the stator coil from being released from the insulator body toward the center of the back yoke; and
an isolation portion protruding from an outer end portion of the insulator body to prevent the stator coil from being in contact with the back yoke,
wherein the plurality of heat dissipation fins are disposed between the release prevention portion and the isolation portion.

9. The stator of claim 1, wherein each of the plurality of teeth is disposed to be separable from the back yoke, and provided with a coupling protrusion so as to be slidably coupled in an axial direction along a coupling groove disposed in the back yoke,
wherein the coupling protrusion protrudes outward in a radial direction from an outer end portion of the tooth, and both side surfaces thereof are inclined such that a size of the cross-sectional area increases outward in a radial direction.

10. The stator of claim 9, further comprising:
an isolation portion protruding from an outer end portion of the insulator body to prevent the stator coil from being in contact with the back yoke;
a neutral wire lead-out portion formed to be cut out at an upper side of the isolation portion so as to draw out a neutral wire of the stator coil;
an extension portion protruding outward in a radial direction from the isolation portion to cover an upper side of the coupling protrusion; and
a connection ring coupling portion disposed to protrude upward so as to engage with a connection ring from the extension portion.

11. The stator of claim 9, further comprising:
an isolation portion protruding from an outer end portion of the insulator body to prevent the stator coil from being in contact with the back yoke;
an extension portion protruding outward in a radial direction from the isolation portion to cover an upper side of the coupling protrusion;
a connection ring coupling portion disposed to protrude upward so as to be engageable with a connection ring from the extension portion;
a cover portion protruding outward in a radial direction from a lower side of the isolation portion to cover a lower side of the coupling protrusion; and
an opening portion disposed to be open between the connection ring coupling portion and the cover portion such that the coupling protrusion protrudes from an outer end portion of the insulator body toward the coupling groove.

12. The stator of claim 1, wherein the insulator is formed of a glass fiber material having a thermal conductivity k within a range of 0.2 to 1.8 to have electrical insulation and thermal conduction.

13. The stator of claim 1, further comprising:
a back yoke insulator that insulates between the back yoke and the stator coil,
wherein the back yoke insulator comprises:
a first back yoke insulator disposed to cover an upper side surface of the back yoke and one side of an inner side surface of the back yoke; and
a second back yoke insulator disposed to cover a lower side surface of the back yoke and the other side of the inner side surface of the back yoke.

14. A fan motor comprising:
a shroud having a suction port on one side thereof;
a motor housing coupled to a lower portion of the shroud;
a rotation shaft extending to cross along an axial direction at an inner center of the shroud and the motor housing and rotatably mounted thereon;
an impeller rotatably mounted on one side of the rotation shaft;
a vane hub provided inside the shroud and provided with a plurality of vanes to guide air sucked in by the impeller into the motor housing;
a stator provided inside the motor housing; and
a rotor mounted on the rotation shaft to be rotatable with respect to the stator,
wherein the stator comprises:
a stator core having a back yoke and a plurality of teeth protruding from the back yoke toward a radial center thereof;
a plurality of stator coils wound on each of the plurality of teeth; and
an insulator that insulates between the stator core and the plurality of stator coils, and
wherein the insulator comprises:
an insulator body that surrounds the tooth; and
a plurality of heat dissipation fins disposed to protrude from a side surface of the insulator body to extend a contact area with the stator coil so as to release the heat of the stator coil.

15. The fan motor of claim 14, wherein the insulator comprises:
a release prevention portion protruding from an inner end portion of the insulator body to prevent the stator coil from being released from the insulator body toward the center of the back yoke;
an isolation portion protruding from an outer end portion of the insulator body to prevent the stator coil from being in contact with the back yoke; and
a cooling space portion disposed to be open in both directions between the release prevention portion and the isolation portion to constitute an air flow path for cooling the stator coil.

16. The fan motor of claim 15, wherein the insulator further comprises an insertion portion disposed to be stepped on an outer surface of the isolation portion, and inserted into and fastened to an accommodation portion disposed on an inner surface of the back yoke.

17. The fan motor of claim 16, wherein the insulator comprises a tooth insulator that insulates between the tooth and the stator coil; and a back yoke insulator that insulates between the back yoke and the stator coil.
